# EUROPEAN PATENT APPLICATION

(11) **EP 1 244 303 A2**
(43) Date of publication of application: **25.09.2002**
(21) Application number: 02006235.2
(22) Date of filing: 20.03.2002
(51) Int. Cl.: H04N 5/74, G06F 3/14

(54) **System to receive information coming from a plurality of sources and to display it via wireless transmission means on a digital video-projector**

(30) Priority: 21.03.2001 IT MI010596
(71) Applicant: Vicari, Sergio, 02015 Cittaducale (Prov. of Rieti) (IT)
(72) Inventor: Vicari, Sergio, 02015 Cittaducale (Prov. of Rieti) (IT)
(74) Representative: Gervasi, Gemma, Dr.

(57) **Abstract**

It is described a system to receive and to display information (video, graphics or other data streams, video signals, etc.) coming from a plurality of sources (telephone line, Internet, cable and/or satellite TV, etc.) where the information is received or generated by an input unit (possibly a console or a Personal Computer) and is displayed via a digital video-projector connected to the input unit by wireless transmission means

## Description

### Invention field

The invention refers to a system to receive information (video, graphics or other data streams, video signals, etc.) coming from a plurality of sources and to display them on a digital video-projector, where the information is received by an input unit (for instance a console or a Personal Computer, in the following "PC") connected to the digital video projector by wireless transmission means.

### State of the art

The video-projectors are equipment (already known and available on the market for a long time) which permit to enlarge, projecting on a screen (or on another equivalent support) images and/or other information (video, graphics or other data streams, video signals, etc.) received and/or generated via an input unit that can be, for instance, a TV receiver, a Personal Computer, a terminal apt to connect to Internet and/or to another telecommunication network and/or to a data bank at least, and so on.

Obviously, the same equipment can be fit to implement different types of input units: for instance, a Personal Computer can also be used to implement a terminal for Internet and/or for data banks.

In the known systems the input unit must be placed near the video-projector and it is connected to it via a cable (or other connection means functionally equivalent) whose maximum acceptable length is drastically limited by numerous parameters, as the cable features (attenuation, group delay, etc.), the (usually high) frequency band occupied by the signal that must be transmitted to the video-projector, the quality required to the image generated by the video-projector and so on.

The introduction on the market of digital video-projectors capable of always qualitatively better performances and having more and more reduced weight and dimensions has made heavier and heavier for the users the above mentioned restrictions implicit in the known reception and visualisation systems.

The Applicant has created a reception and visualisation system exempt from the above mentioned restrictions, where the input unit (which receives and processes and/or produces the information to display) is connected to the video-projector via wireless transmission means, which permit to place every time the video-projector in the preferred and/or most suitable user's position and to move it easily, so overcoming the technical and logistic restrictions implicit in the known systems.

The reception and visualisation system created by the Applicant is particularly advantageous as it permits to match the advantages coming from the use of wireless transmission means (i.e. the possibility to put the video-projector every time in the preferred position and to move it easily) with those achieved (or achievable) "handling" in a digital way the information to be displayed and displaying the so handled information via a digital video-projector capable of really high quality performances.

Advantageously the input unit is a Personal Computer, a radio frequency transmission unit or a broadband unit (in the following: "console") apt to manage and process a plurality of information (video, graphics or other data streams, video signals, etc.) received from a plurality of sources as, for instance, a telephone line, Internet, a cable and/or satellite TV, etc.

It is an interesting feature of a system carried out according to the present invention that the same video-projector (connected to the input unit via wireless transmission means) can be conveniently used both in the "business" context for displaying information (images, diagrams, etc.) memorised and/or generated by a Personal Computer (or by another unit functionally equivalent) placed far from a video-projector, and in the home context for displaying in the every time user's preferred position (in the house and/or in the immediate surrounds, like the garden, for instance) the information received and processed by an input unit placed in the optimal position to be easily connected to the above mentioned sources.

### Summary of the invention:

The object of the present invention is a system to receive and display information coming from a plurality of sources, which includes, in combination to each other, an input unit apt to receive and to process the information and a video-projector connected to the input unit via wireless transmission means.

Preferably the input unit is a Personal Computer, a radio frequency transmission unit or a console.

### List of the figures:

The invention will be better described with reference to not limiting embodiments shown in the enclosed figures, where:
- Figure 1 shows a block diagram of a reception and visualisation system carried out according to the invention;
- Figure 2 shows a block diagram of an embodiment of a console, which is the input unit of figure 1;
- Figure 3 shows a block diagram of an embodiment of the digital video-projector of figure 1;
- Figure 4 shows a block diagram of a reception and displaying system, carried out according to the invention, including a console and a Personal Computer connected to the digital video-projector via wireless transmission means;
- Figure 5 shows a block diagram of a reception and visualisation system, carried out according to the invention, including a console, a Personal Computer and a radio frequency transmission unit connected to the digital video-projector via wireless transmission means;
- Figure 6 shows a block diagram of an embodiment of the radio frequency transmission unit of figure 5;
- Figure 7 shows a block diagram of an embodiment of the digital video-projector of figure 5;
- Figure 8 shows schematically a video-projector according to the invention, provided of a multiple-antennas system;
- Figure 9 shows schematically a further embodiment of a video-projector according to the invention;
- Figure 10 shows a detail of the video-projector of figure 9;
- Figure 11 shows schematically a wireless video-conference between two locations made through systems according to the invention;
- Figure 12 shows a block diagram of one of the locations of figure 11;
- Figure 13 shows a block diagram of a digital video-projector belonging to the location of figure 12;
- Figure 14 shows a block diagram of a digital video camera belonging to the location of figure 12;
- Figure 15 shows a block diagram of a digital video-projector apt to receive and show a projection digital TV.
In the enclosed figures the corresponding elements will be identified through the same references.

### Detailed description.

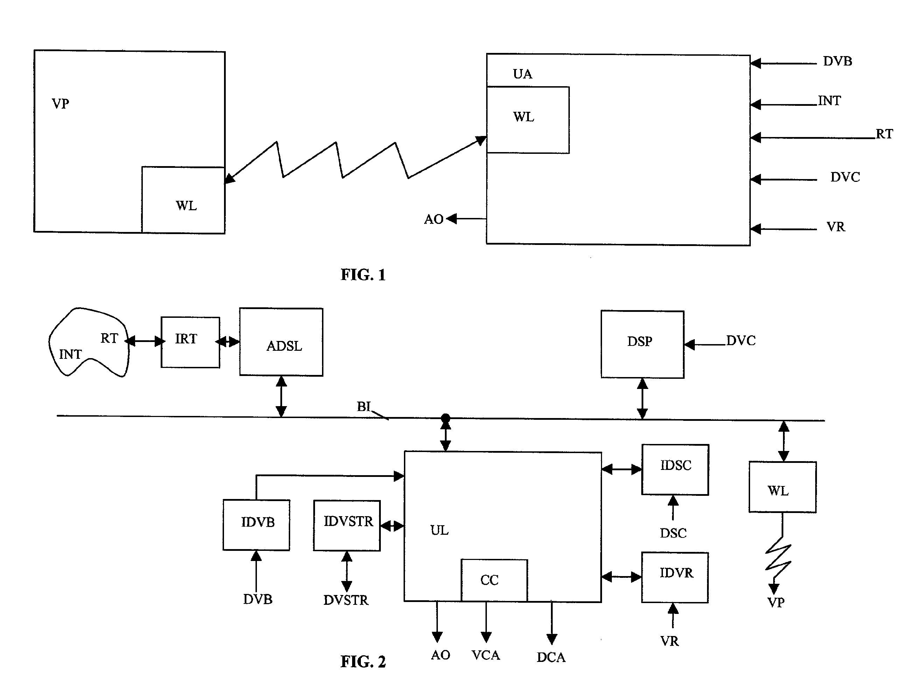

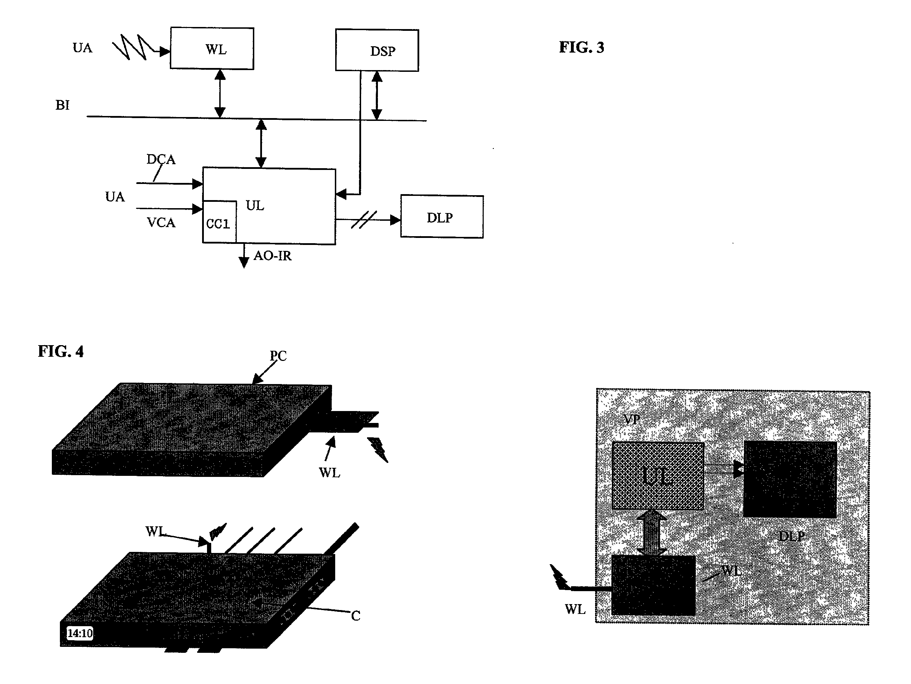

Figure 1 shows a block diagram of a reception and display system carried out according to the invention, which includes, in combination to each other, a input unit UA apt to receive and process information coming from a plurality of sources and a digital video-projector VP (better described with reference to figure 3) which is connected to the input unit UA trough wireless transmission means WL.

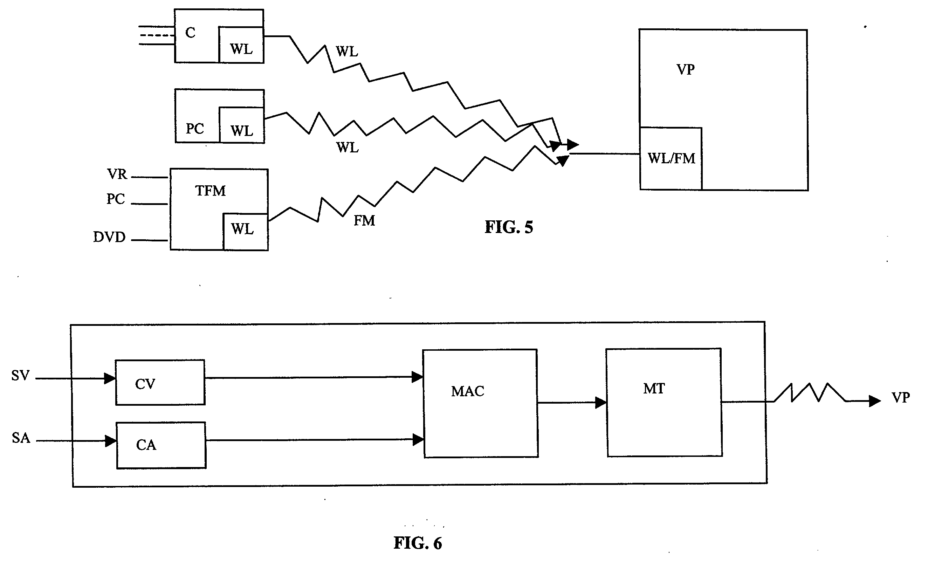

In the embodiment of figure 1 the input unit UA is a console (which will be described with reference to the embodiment schematically shown in figure 2) but, without departing from the scope of the invention, the input unit UA can be a radio frequency transmission unit (better described with reference to figure 6) or a Personal Computer; still without departing from the scope of the invention the digital video-projector VP can be replaced by another video-projector functionally equivalent, for example by a liquid crystals video-projector.

Figure 1 shows the input unit UA connected to a plurality of sources (consisting, as a not limiting example, at least of the telephone line RT, of a digital video receiver DVB, of a terminal INT for the access to Internet and/or other telecommunication network, of a digital video camera DVC and of a video recorder VR), the digital video-projector VP and the wireless transmission means (represented, in fig. 1, by the functional blocks WL belonging to the digital video-projector VP and to the input unit UA) which connect the input unit UA to the digital video-projector VP.

In figure 1, the input unit UA further comprises an output AO to transmit to an audio device (preferably but not necessarily a HI-FI device) the audio signal, if any, associated to the video signal and/or to the data streams displayed via the digital video-projector VP.

Preferably the wireless transmission means WL are realised in conformity with the protocol known as "WLAN 802.11 b/a" and will not here described because implementable by a skilled person without involving an inventive step.

The use of a WLAN 802.11 b/a protocol (which foresees a formal checking of the data "packet" received and the re-transmission of the "packets" where has been found any errors) could involve some problems if the error rate of the transmission means WL is not so low to drastically limit the number of "packets" to re-transmit, interrupting the data stream received by the video-projector VP via the transmission means WL: in fact too frequent interruptions in the data stream impairs (or could impair) the reception of data in real time, in particular if the signal to transmit is a video signal.

To obviate this drawback and to improve the reliability of the transmission means WL, in a preferred embodiment of the invention the data are coded through coding methods (as, for instance, the Reed-Solomon) which permit to detect and to correct errors, if any, in the transmitted data "packets", so reducing the chance of a re-transmission of a data "packet".

Such coding methods will not be described here because they are already known.

Figure 2 shows a simplified block diagram of an embodiment of a console which is the input unit UA of figure 1; in figure 2 all the memory units (hard disks; RAM ROM and/or FLASH memories; etc.) have been omitted for a simpler graphic representation.

Such console receives the information from the sources (DVB, DVC, VR, DVSTR, DSC, RT); it separates the video signal and the data streams from the audio signal; it codes the video signal and the data streams and transmits them (for instance in a MPEG TS format) to the digital video-projector VP via the wireless transmission means WL; it decodes the audio signal, if any, and transmits it in a known way to an audio device connected to the output AO; it receives from the Internet source INT the respective "packets", it decodes and transmits them to the digital video-projector VP via the wireless transmission means WL and it manages the communication with the Internet server.

The console shown by the not limiting embodiment of figure 2 includes at least the following functional units, connected each other via the bi-directional bus BI:
- a logic unit UL, implemented for instance via one or more AV7200 integrated circuit produced by Texas Instruments; conveniently the logic unit UL codes the data to be transmitted through said coding methods apt to detect and to correct errors, if any;
- an ASDL broadband modem, connected to the telephone line RT: if, as it happens at present, the telephone line RT is an analogue network, the ASDL unit is interfaced with the telephone line RT via an analogue-digital, digital-analogue interface IRT;
- a Digital Signal Processing unit DSP (implemented, for instance, via one or more integrated circuits of the C6205 group produced by Texas Instruments), which decodes the data "packets" coming from the internet source INT and communicates with the Internet server; the DSP unit moreover receives and transcodes the signal emitted by the digital video camera DVC, if present;
- the wireless transmission means WL, preferably realised in conformity with the WLAN 802.11 b/a protocol.

The logic unit UL communicates with at least one digital video receiver DVB via the interface IDVB, with a digital video storage unit DVSTR (i.e. HDD or DVD units) via the interface IDVSTR preferably realised in conformity with the IDE or IEEE1394 standards, with the digital video recorder VR (i.e. a DVCR or digital camcorder) via the interface IDVR preferably realised in conformity with the IEEE 1394 regulation and/or with a digital camera DSC via the interface ICSD, preferably realised in conformity with the USB standard.

The digital camera DSC and the interface IDSC can be omitted without departing from the scope of the invention.

The other interface circuits (IRT, IDVB) shown in figure 2 will not be here described because they are known or anyway implementable by a skilled person without involving an inventive step.

If the at least one digital video receiver DVB requires the use of a "Smart Card", the console further includes at least one "Smart Card" decoder, omitted in figure 2 for a simpler graphic representation.

Concerning the audio signal, if any, separated from the video signal by the logic unit UL, it is sent to the audio device via the output AO of the logic unit UL.

If two digital video receivers DVB (for terrestrial, satellite and/or cable TV) are connected to the console, it is advantageous to double the interface IDVB: this permits to display via the digital video-projector VP the program received via one of the digital video receivers DVB and at the same time to record (in the hard disk and/or in other memory belonging to the console or via the video recorder VR, if present) the program received via the other digital video receiver DVB and to display it subsequently via the digital video projector VP.

Finally, in the embodiment illustrated as an example in figure 2, the console can be connected to the digital video-projector VP (instead of via the wireless transmission means WL) via a cable VCA (or other equivalent transmission means) attested in a known way (for example via a SCART connector, a VGA cable or another equivalent means) to a further logic unit CC, belonging to the input unit UA, which is suitable to increase the transmission speed to improve the performances of the system to which the present invention refers .

If connected to the video-projector VP via the cable VCA, the console receives the information from the sources (DVB, DVC, VR, RT); it separates the video signal and the data streams from the audio signal, if any; it decodes the video signal and processes the data streams and transmits decoded video and pictures to the digital video-projector VP via the cable VCA; it decodes the audio signal, if any, and transmits it in a known way to an audio device connected to the output AO; it receives from the Internet source INT the respective "packets", decodes them and transmits the resulting video and pictures to the digital video-projector VP via the cable VCA and manages the communication with the Internet "server".

According to an embodiment not shown in the enclosed figures, the console is "transparent" to the video signals, to the data streams and to the Internet "packets" and transmits them (without changes) via the wireless transmission means WL (respectively via a further cable DCA) to the digital video-projector VP, which receives the video signal, the data streams and the Internet "packets", decodes them generating the images to be projected on the screen and manages the communication with the Internet "server".

The data cable DCA can use a known way such as USB, IEEE1394 or other data connection capable of a sufficient bit rate.

Finally, instead of the console described with reference to the block diagram of figure 2, the input unit UA can be realised through a Personal Computer, apt to carry out all the functions made by the console, where all the functional blocks previously disclosed with reference to the console are present or are implemented:
such functional blocks can be implemented by a skilled person without involving an inventive step.

Figure 3 shows a block diagram of an embodiment of the digital video-projector VP of figure 1; in figure 3 all the memory units (hard disks; RAM, ROM and/or FLASH memories; etc.) have been omitted for a simpler graphic representation.

The digital video-projector VP decodes the video signals and the data streams sent (in a MPEG TS format, for instance) by the input unit UA to generate the images to be projected on the screen and, preferably, it eliminates the mechanical and electrical "noise" due to the movement of the mechanical parts of the projector itself, such as fans and colour wheel.

The digital video-projector VP shown in the not restrictive embodiment of figure 3 includes at least the following functional units, connected each other via the internal bi-directional "bus" BI:
- a logic unit UL implemented, for instance, by one or more AV7200 integrated circuits produced by Texas Instrument;
- a processing unit DSP (implemented, for instance, by one or more integrated circuits of the C6205 group produced by Texas Instrument), which decodes the signal sent by the corresponding processing unit DSP belonging to input unit UA; conveniently, the processing unit DSP decodes the data transmitted via the above mentioned coding methods apt to detect and correct errors, if any;
- the wireless transmission means WL, preferably realised in conformity with the WLAN 802.11 b/a protocol.

In figure 3 are also visible the video-projection means DLP, led by the logic unit UL, which are the real video-projector and that will not be further described as they can be of a commercial type (DLP is a Texas Instrument registered mark).

Preferably, the mechanical and electrical "noise" due to the movement of the mechanical parts of the DLP unit can be eliminated by the logic unit UL, which generates a mechanical and electrical "noise" apt to cancel the ones due to the movement of the mechanical parts of the video-projection means DLP.

Moreover, in the embodiment illustrated as an example in figure 3 the digital video-projector VP is apt to be connected to the input unit UA (instead of via the wireless transmission means WL) via the cable VCA (or other equivalent transmission means) attested in a known way (for example via a SCART connector or another equivalent means) to a further logic unit CC1 (corresponding to the logic unit CC of figure 2) which is suitable to improve the performances of the system to which the present invention refers .

If it is connected to the input unit UA via the cable VCA, the digital video-projector VP decodes the video signals and/or the data streams and/or the Internet "packets" received from the input unit UA, leads its unit DLP to generate the images to be projected on the screen, manages the dialogue with the Internet "server" and, preferably, eliminates the mechanical and electrical "noise" due to the movement of the mechanical parts of the unit DLP.

In the case the audio signal is transmitted with the video signal to the digital video-projector VP, it is transcoded by the processor of the logic unit UL and transmitted in a wireless way by the AO-IR unit. The audio coder employed for this transmission could preferably use the SPDIF standard, which is common on audio amplifiers.

The infrared transmitter IR communicates the audio signal to an infrared receiver placed close to an audio amplifier. Such infrared transmission system is standard and does not need to be described here. This is useful when the audio source and the projector are not physically close to the audio amplifier and avoid lengthy cables.

According to a further embodiment of the invention, not shown in the enclosed figures, where the console is "transparent" to the video signals, to the data streams and to Internet, the digital video-projector VP receives from the console (via the wireless transmission means WL or via the cable DCA respectively) the compressed video signals, the data streams and the Internet "packets", it decodes them generating the images to be projected on the screen and manages the communication with the Internet "server".

Finally, the digital video-projector VP can be connected and led (instead of by the console described with reference to the block diagram of figure 2) by a Personal Computer apt to carry on all the functions made by the console, where are present (or are implemented) all the functional blocks previously discussed referring to the console: such functional blocks can be implemented by a skilled person without involving an inventive step.

Figure 4 shows a block diagram of a reception and visualisation system, carried out according to the invention, including a console C (described, for instance, in figure 2) and a Personal Computer PC connected to the digital video-projector VP (described, for instance, in figure 3) via wireless transmission means WL, preferably realised in conformity with the WLAN 802.11 b/a protocol.

For a simpler graphic representation, in figure 4 the digital video-projector VP includes only the logic unit UL, the video-projection means DLP and the wireless transmission means WL, while have been omitted the processing unit DSP and the further logic unit CC1, if present.

Figure 5 shows a block diagram of a further embodiment of a reception and visualisation system according to the invention which includes a console C, a Personal Computer PC and a radio frequency transmission unit TFM connected to a digital video-projector digital video-projector VP via wireless transmission means.

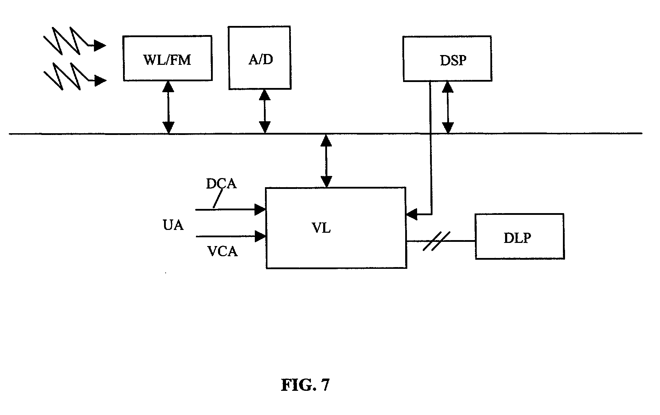

As already described, the console C (described, for instance, in figure 2) and the Personal Computer PC are connected to the digital video-projector VP (schematically described in figure 7) via wireless transmission means WL, preferably realised in conformity with the WLAN 802.11 b/a; the radio frequency transmission unit TMF (described in figure 6, for instance) receives the information to be transmitted from a plurality of sources (video recorders VR, DVD decoders, Personal Computers PC, etc.) and it is connected to the digital video-projector VP via a radio frequency link FM.

As already known, a video signal can be transmitted as an analogue signal via a frequency modulation link FM or in a compressed way (in a MPEG format, for instance) via wireless transmission means WL, preferably realised in conformity to the WLAN 802.11 b/a protocol.

Since the wireless transmission means WL operate in the same frequency band used for the frequency modulation transmission FM, in the video-projector VP it is possible to use the same receiving module (indicated in figures 5 and 7 with WL/FM) to receive both the digital signals sent by the console C and/or by the Personal Computer PC via the wireless transmission means WL and the analogue signals sent by the radio frequency transmission unit TFM via the frequency modulation link FM.

This increases the flexibility of a system carried out according to the invention, improving the performances.

Figure 6 shows a block diagram of an embodiment of the radio frequency transmission unit TFM of figure 5, where the information to be transmitted, coming from a plurality of sources (VR, DVD, PC etc.), are schematically represented by a video signal SV and by an audio signal SA.

In figure 6 all the memory units (hard disks; RAM, ROM and/or FLASH memories; etc.) have been omitted for a simpler graphic representation.

Both the video and audio signals (SV, SA) are decoded and digitalised via the functional units CV, respectively CA (not described here because already known) and coded via the audio/video coder MAC: the signal coming out from the coder MAC is sent to the transmission module MT using a frequency modulation link FM to be transmitted to the digital video-projector VP.

Also the audio/video coder MAC and the transmission module MT will not be here described because already known.

Finally, the audio signal SA (to be sent to the digital video-projector VP together with the video signal SV) can occupy different frequency bands: in one embodiment of the system according to the invention, the audio/video coder MAC is apt to manage such type of audio signal SA by associating to the signal to be transmitted to the digital video-projector VP a further signal to communicate to the digital video-projector VP the frequency band every time occupied by the audio signal SA.

Figure 7 shows a block diagram of a embodiment of the digital video-projector VP of figure 5, which differs from that shown in figure 3 essentially in that the reception unit (WL/MF) is apt to receive both the digital signals transmitted via the wireless transmission means WL and the analogue signals transmitted via the radio frequency link FM and in that it further includes an analogue/digital converter A/D which converts the analogue signals received via the radio frequency link FM in digital signals apt to be "managed" by the processing unit DSP and/or by the logic unit UL.

In figure 7 all the memory units (hard disks; RAM, ROM and/or FLASH memories; etc.) have been omitted for a simpler graphic representation.

The digital signals received via the transmission means WL, realised in conformity to the WLAN 802.11 b/a protocol, are transcoded (for example via one or more ACX100 integrated circuits of Texas Instrument, omitted in figure 7 for a simpler graphic representation) and sent to the processing unit DSP to be processed and displayed by the visualisation means DLP.

The analogue signals received via the radio frequency link FM are converted in digital signals by the A/D converter and sent to the processing unit DSP to be processed and displayed by the visualisation means DLP.

Moreover, similarly to what has been described with reference to figure 3, the logic unit UL is apt to eliminate the mechanical and electrical "noise" due to the movement of the mechanical parts of the unit DSP.

Finally, a Personal Computer PC can transmit in a transparent way to the digital video-projector VP, via the transmission means WL, all the elements to be displayed, compressed via a known algorithm to reduce the transmission time.

At the end of the transmission the processing unit DSP of the digital video-projector VP restores the image on the Personal Computer screen and displays it via the visualisation means DLP.

Furthermore, a system carried out according to the invention can be conveniently connected with at least another functionally equivalent system to set up a video conference, where the video signal emitted by a digital video camera DVC associated to the input unit UA of the system according to the invention is coded by the processing unit DSP and sent, via the broadband modem ASDL and the telephone line RT, to the other system where it is received by a broadband modem and decoded; the coded video signal coming from the other system is received by the system according to the invention via the broadband modem ASDL and decoded by the processing unit DSP belonging to the digital video-projector PV of the system to which the present invention refers.

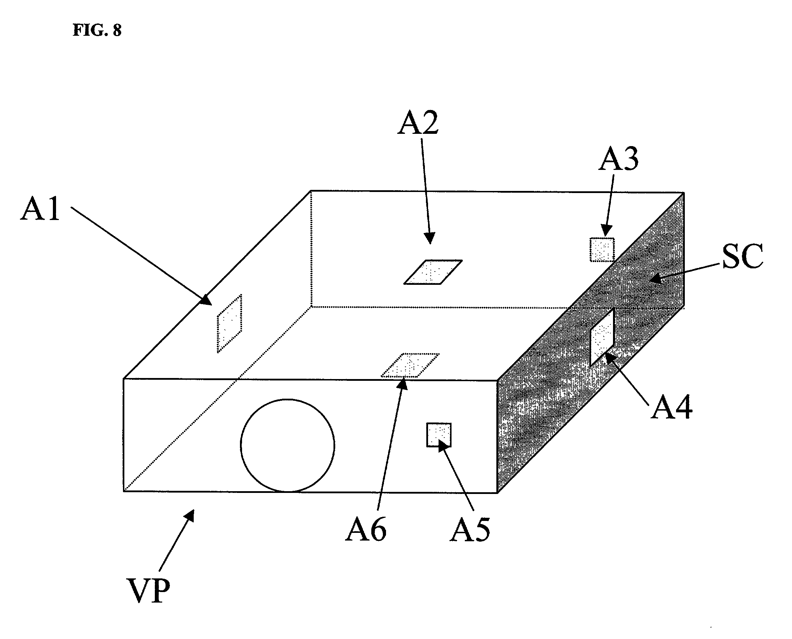

Figure 8 shows a preferred embodiment of a digital video-projector VP realised according to the invention, which is provided with a multiple-antennas system A1-A6; the digital video-projector VP is provided with at least three right-angled antennas.

To appreciate better the novelty of this embodiment, it must be considered that a digital video-projector connected to a video source via a radio signal is usually subject to some restrictions as, for instance:
a) the antenna must be fixed outside the body of the projector VP to avoid oversights, if any, which could expose the antenna, orientable or not, to breakage, impacts and folding which are (or can be) in particular possible for portable projectors;
b) putting the antenna inside the body of the projector would reduce the above problems but would create further problems because of the metallic parts (optic, feeds, printed circuits) that are in a projector and that prevent the correct reception/transmission of the signal if the source is not exactly pointed in the direction of the internal antenna; similarly reflection phenomena on the inner sides of the body can determine a not correct transmission/reception of the signal;
c) in case of an internal antenna, a home use of the digital video-projector would be difficult due to the localisation of the source, which can be in any part of the house; so it would not be convenient to limit the mutual position of the projector and the source.

With the proposed solution a plurality of antennas, preferably six antennas A1-A6, are placed inside the right-angled walls of the body SC of the digital video-projector VP: in figure 8 there is an antenna placed inside each wall of body SC.

The A1-A6 antennas are preferably planar antennas because, compared to other types of antenna, they are easy to assemble and it is also possible to foresee planar antennas planned to have a sufficient gain to overcome the screening of the eventual projector's covering material.

As an example, for the transmission of 2,4-2,5 GHz (according to IEEE802.11b standard) the antennas A1-A6 have a side dimension of about 2-2,5 cm.

Depending on the used signal modulation, the signal coming from the different antennas can be combined in a different way. In case of a transmission according to IEEE802.11a standard, which uses the modulation OFDM, it is possible to add the six antennas' signals to create a single input for the receiver. The OFDM demodulation can operate with the signal of the six antennas and extract the biggest advantage, because there are multiple sources.

In case of a modulation that cannot use the signal of the six antennas, the single signals of the antennas are combined via a "switch" by which the signals coming from the antennas A1-A6 are matched to select the strongest signal, according to a technique known as "antenna diversity".

Conveniently, the just described solution overcomes the problems of the already known antennas systems for digital video-projectors.

In particular, by placing six planar right-angled antennas on each side of the projector's body an always-optimal signal reception, independent from the mutual position between source and digital video-projector VP, can be obtained.

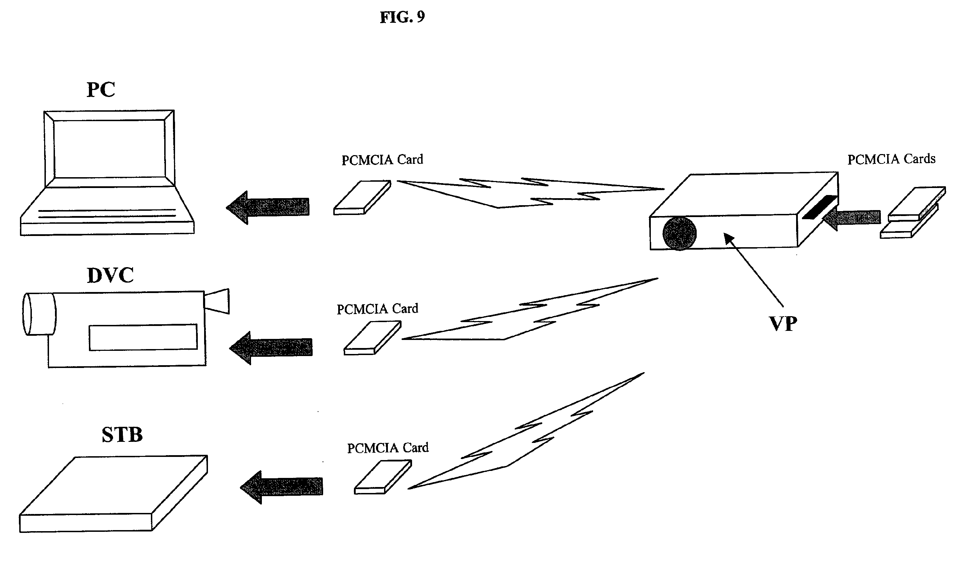

Referring to figure 9, it is described a further embodiment which permits to increase the digital video-projector functionality in a modular way and without the necessity of operating inside the projector.

According to this embodiment, from the external part of the video projector it is possible to insert cards, known as "PCMCIA cards", which are connected to the control card of the projector which contains the microprocessor, increasing therefore its functionality and power.

As an example a PCMCIA card with which the video projector can be equipped can include the following functions:
- an IEEE802.11 WLAN module, which permits a "wireless" video connection to the sources (STB, PC, DVD, VHS; etc.);
- an Ethernet standard card, to connect to a cable network LAN;
- an IEEE 1394 link (i-link or fire-wire), to connect to the Camcorders or to other video sources;
- a Bluetooth module, to connect to a PDA or to other portable sources;
- an analogue or digital terrestrial TV receiver;
and the following developments:
- a DSP sub-system, apt to decode a compressed video signal received by one of the fast systems mentioned above;
- a DSP sub-system, that can be further used in the data sources (a Personal Computer for instance) permitting a capability of processing the video compression at real time;
- a processing sub-system, to add the management capability of the interactive applications (games, web-browsing, etc.);
- communication sub-systems;
- memory cards, apt to provide additional contents of any possible type;
- a processor sub-system, apt to provide additional calculation capabilities.

Obviously other modules can be foreseen and some functions can be found in combination.

Conveniently, the possibility to insert standard PCMCIA cards common to the Personal Computer and to the other multi-means systems (STB, console, playstation, etc.) will induce a costs reduction of the cards as an effect of the market scale and for their multiple use.

Moreover, it is possible to arrange a "basic" digital video-projector at a limited cost and extend it modularly by inserting the wanted functions for a domestic and/or business usage.

A further advantage is that it eliminates or anyway drastically reduces the technological obsolescence of the digital video-projector.

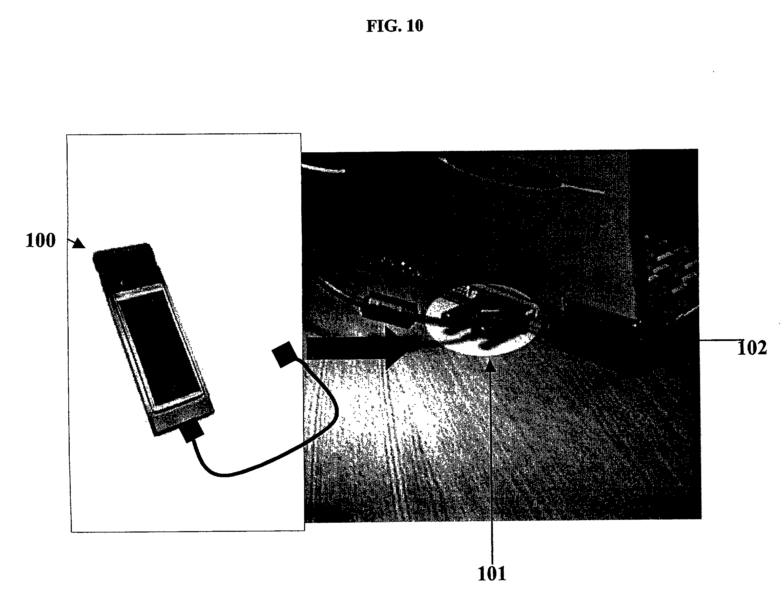

Referring to the scheme of figure 10, it is also advantageous to foresee the use of an accelerator DSP 100 for PCMCIA cards with VGA/DVI input and output to permit to the PCMCIA card to receive the VGA output 101 of a Notebook 102 (when the data source is a Notebook) where the PCMCIA card can be inserted.

The PCMCIA card, which contains a fast DSP unit, can be in fact used as an accelerator to compress the output of the Notebook's display at an image speed sufficient for the video in movement.

With this solution it is overcome the present problem that the greatest part of the notebooks, even if provided with a fast processor, cannot carry out a coding of the "frame buffer" at 25 or 30 images per second, both for a SVGA resolution and a XGA one; on the contrary the use of a fast DSP unit can permit this operation.

The compressed signal can be transmitted via a data network, for instance a wireless one (WLAN), to be sent to a digital video-projector or to a far screen.

At this point, the technical problem to overcome on the "Notebook side" is that of the width of the PCI bus band. The PCMCIA card is connected inside the PCI bus of the network, via the Cardbus interface.

To compress the display content (for example in JPEG), the "frame buffer" content must be transferred to the DSP card at 25 or 30 times per second. For a SVGA resolution, 25 images per second correspond to 36 Mbytes per second and to 55 Mbytes per second for a XGA resolution.

The PCI bus of the greatest part of the notebooks can hardly support input over 10-15 Mbytes per second and this is not sufficient.

To solve this problem it is enough to provide the PCMCIA card with a video output, compatible with the standard display output (VGA or DVI) of the Notebooks.

The PCMCIA card contains a triple ADC to convert the VGA RGB signal into the digital one, if the Notebook's output is an analogue output; if it is digital and the standard output DVI is used, an interface chip DVI is used to acquire the RGB signal and transfer it to the DSP of the PCMCIA card.

Of course, the described system can be also used to transfer contents to any monitor (LCD, CRT, digital and analogue TV, etc.) with the same method used for the digital video-projector.

As already said, two systems carried out according to the invention can be connected to each other to realise a video conference: here forward it is described, as a not limiting example, one of such systems (carried out by assembling equipment of the above described type and known programs for the management of data transmission) that can be used to realise a video conference location.

The information (images and sound) are exchanged between the two locations in a digital form via Internet or via another bi-directional data transmission system functionally equivalent as, for instance, WLAN or Ethernet.

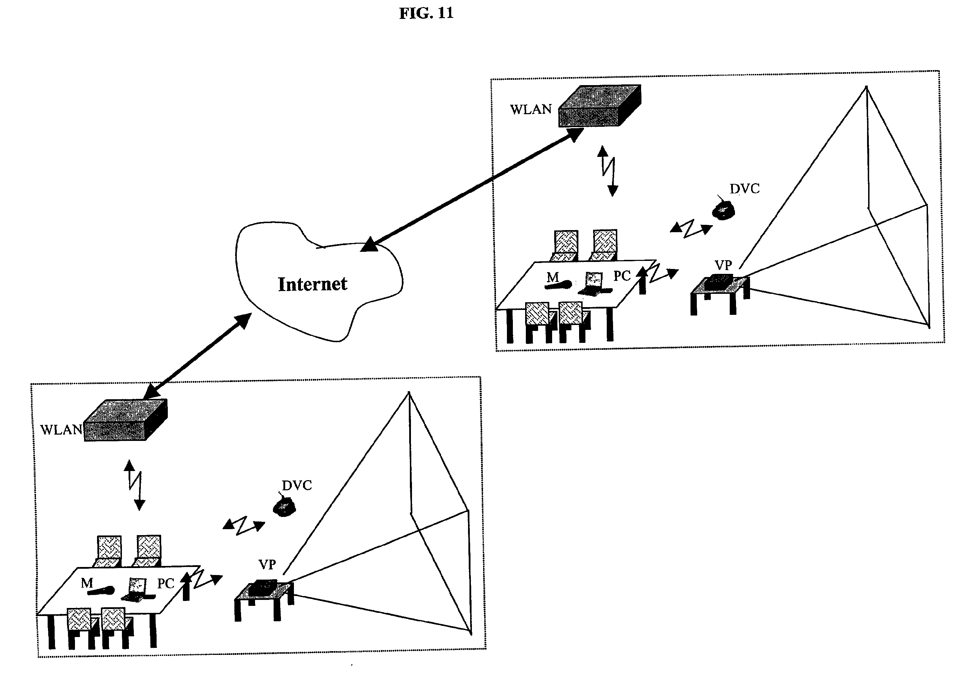

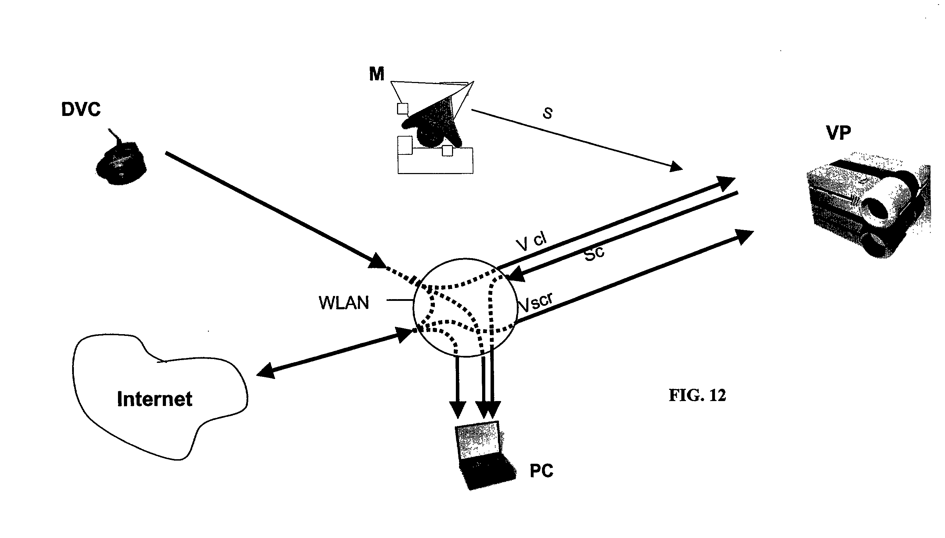

Figure 11 shows schematically two video conference locations set up through equipment according to the invention and linked via Internet: each location (better described in figure 12) includes at least one microphone M, at least one digital video camera DVC, a managing unit PC, a digital video-projector VP and an access unit WLAN, where at least the digital video camera DVC, the managing unit PC, the digital video-projector VP and the access unit WLAN are linked by wireless transmission means.

Figure 12 shows the block diagram of an embodiment of a video conference location, that can be easily set up in any room with an access to Internet (or to any other equivalent data network) and which includes, in combination to each other:
- a microphone M, connected via an analogue link S to a digital video-projector VP,
- the digital video-projector VP connected via an access unit WLAN and Internet to the remote audio/video source. It sends the audio signal (received from the microphone M) after having digitalised and compressed it (SC signal) to the remote location via the access unit WLAN and Internet. It receives, decodes and displays a local compressed video signal Vcl generated by the digital video camera(s) DVC and the compressed remote audio-video signal Vscr received by the access unit WLAN from at least one remote location. The local and remote video signals can be overlaid or displayed alternatively under user control. The virtual connection between the digital video-projector VP, the local digital video camera DVC and remote audio-video source and destinations is achieved by way of standard audio video communication protocol such as H.323;
- the digital video camera(s) DVC, connected to the access unit WLAN where it transmits the compressed local video signal Vlc;
- a management unit PC, where programs (not disclosed here) apt to manage the data streams in the location and the data streams exchanged with at least one remote location are loaded; the management unit PC communicates with the access unit WLAN from which it further receives the compressed audio signal (SC) and the local compressed video signal (Vcl). The management unit PC, that can be the source of video or graphic presentation material, is connected to the video projector VP via the access unit WLAN and to the remote location via the same WLAN access unit and Internet;
- an access unit WLAN, preferably using the IEEE802.11 b/a standard incorporating an Access Point, that is either incorporating also a router and broadband modem or connected to a LAN which itself provide a broadband access to Internet.

The compression algorithms will not here discussed because already known.

Instead of via the analogue link S, the microphone M can be connected to the digital video-projector VP via an infrared or frequency modulation (FM) wireless transmission system; in this case, near the video projector VP it is placed a wireless transmission system's receiver connected to the audio analogue input of the digital video-projector VP.

The management unit PC can be further used to transmit fixed and/or animated images (called "slides") to the digital video-projector VP, to which it can be connected to via an analogue video connection, already known, omitted in fig. 12 for a simpler graphic representation.

The compressed remote audio/video signal Vscr includes (or can include) both live video captured by at least one digital video camera DVC of the remote location and "slides" generated by a source (a Personal Computer PC, for instance) connected to the access unit WLAN of the remote location via Internet.

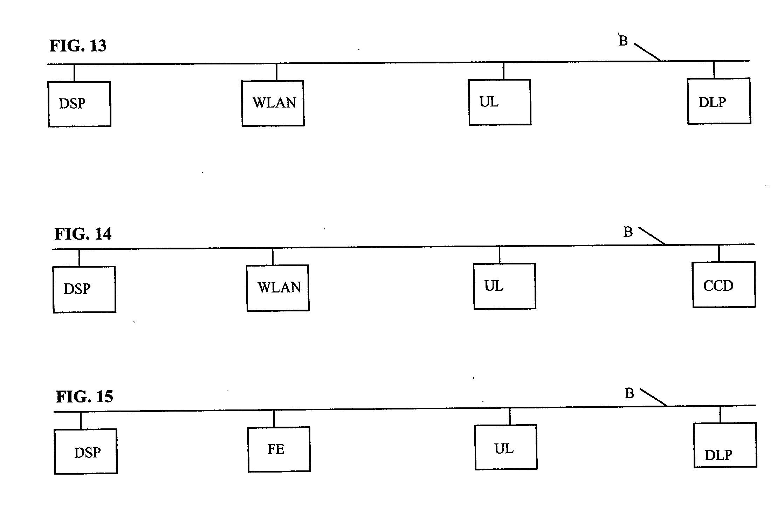

The transmission of "slides" generated in a location to at least one remote location can create some problems related, for instance, to the speed transmission and/or to the quality of the received "slide" and can be made, for instance, in the following ways:
a) the managing unit PC, apart from transmitting the "slides" to the digital video-projector VP, transmits them to at least one remote location via connection means WLAN (figure 13) and via Internet: such transmission can be slow if it is required high resolution and quality;
b) the "slides" are sent to the at least one remote location before the video conference and are called back transmitting via Internet only the control signals of the presentation software (PowerPoint for example): the presentation is fast and can be of high quality;
c) the digital video-projector VP compresses the image displayed and transmits it to at least one remote location, where it is decoded by the DSP unit of the digital video-projector VP (figure 13) and displayed by the video-projector itself.
   To improve the transmission quality, overcoming the restriction imposed by the bandwidth of the Internet transmission, a coding algorithm (not described here because already known) can be used, which permits to "treat" in different ways the stable and moving parts of the image to be coded and transmitted.
   The moving part, including the movement, is coded with a fixed frequency (preferably 10-30 "frames" per second), while the stable part is coded with a known hierarchical method (for example JPEG or JPEG2000), so improving progressively the image resolution.
d) to capture the "slide" via digital video camera DVC and to code and transmit it to at least one remote location.
   This permits, for instance, to capture the speaker together with the "slides".
   The quality of the "slide" is limited by the transmission bandwidth, by the join of moving objects along or in front of the "slide" and by the video camera resolution.
   Also in this case, the use of a coder which separates the image moving part from the stable one and of a hierarchical coding for the stable part improves the quality of the "slide", whose limit depends on the video camera resolution.

Figure 13 shows the block diagram of a digital video-projector VP belonging to the site of figure 12, which includes:
- video-projection means DLP,
- a logic unit UL apt to support Internet, video conference protocols (Microsoft "Netmeeting", for instance) and an application software (already known) to select and overlay, mix and scale both the live video signals and the "slides";
- a DSP system, apt to code and decode the audio and video signals, according to the most common standard and algorithms (H.263, JPEG, MPEG4, etc.);
- an access unit WLAN apt to connect to the net the digital video-projector VP via PCMCIA card, which can be:
   - a WLAN IEEE802.11 b/a card,
   - an Ethernet card,
   - a broadband card or a standard modem card,
   - a functional unit known as "H.323 standard stack",
   - a UMTS card.

In the block diagram of figure 13 the functional blocks DLP, UL, DSP and WLAN are connected to each other via a data bus B.

The at least one digital video camera DVC and the at least one microphone M can be connected to the digital video-projector VP via audio and video analogue inputs: the audio and video analogue signals generated by the at least one microphone M and by the at least one video camera DVC, respectively, are coded via the DSP system belonging to the digital video-projector VP.

Without departing from the scope of the invention, the at least one digital video camera DVC and the at least one microphone M can be connected to Internet independently and, in particular, the digital video camera DVC can have its microprocessor and means apt to connect it to the net, to Internet for example.

Figure 14 shows a block diagram of a digital video camera DVC belonging to the location of figure 12, which includes:
- a capturing module CCD;
- a logic unit UL apt to support the IP protocol and video conference protocol stacks;
- a DSP system, able of compress the video signal generated by the CCD module;
- WLAN units access, apt to connect the digital video camera DVC to the net, which could be an IEEE802.11 b/a WLAN card, a UMTS card or an Ethernet card.

In the block diagram of figure 14 the functional blocks DSP, WLAN, UL and CCD are connected to each other via data bus B.

Conveniently, the digital video camera(s) DVC can be a 360° camera (placed on the digital video-projector VP or behind the projector itself and connected to the video-projector VP via a wired link realised in conformity with IEEE1394) which is apt to embrace both all the attendants to the video conference and the image projected on the screen and the speaker, if any.

On the market are available several types of 360 degrees video cameras which provide an image that, before being displayed, needs to be processed to restore its shape and/ or continuity.

Such a process is performed by the DSP unit of the digital video-projector VP, which will also compress the image using the algorithm selected for the video communication (H.263, MPEG 4, etc.).

If the bandwidth available on the Internet link is sufficient, the full picture can be transmitted and the selection of the part of image to display can be done in the remote location(s).

If the bandwidth is not sufficient for such a high-resolution picture, the selection can be done at the location and only the selected part is coded and transmitted.

It is also possible to use more standard cameras, such as webcam's, that can be connected to the digital video-projector VP via a Video Mixer (not described here because already known, which can anyway be implemented by a skilled person without involving an inventive step) which receives from the webcam standard inputs signals in USB or RGB format and sends to the digital video-projector VP an output signal in RGB format. The DSP unit of the digital video-projector VP compresses the mixer video output signal (or only a part of it) and transmits it to at least one remote location, where it is possible to select the image to display.

Finally, the microphone(s) M can be a high quality microphone, apt to eliminate the noises, connected to the digital video-projector VP, to permit to the DSP unit of the digital video-projector VP to compress and transmit it together with the audio signal.

Furthermore, by integrating a digital terrestrial TV receiver in a digital video-projector VP which differs from that of figure 13 essentially because the access unit is made of interface means (digital Front End) with the TV receiver, such digital video-projector VP can be conveniently used to receive and display the digital TV.

Such digital video-projector VP, illustrated in figure 15, includes, in combination to each other:
- DPL video-projection means;
- a logic unit UL, which supports application software including the IP and WLAN communication protocols;
- a DSP system apt to code and decode audio and video signals, in particular to decode a data stream in the DVB MPEG format;
- FE means (for example incorporating the standard DVB-T receiver, demodulator and Forward Error Correction functions) apt to capture the digital terrestrial TV signal and to transmit it to the receiver for a digital TV;
- a B bus apt to connect to each other the above mentioned functional blocks (DLP, UL, DSP and FE).

Conveniently, the digital terrestrial TV receiver can be integrated into the logic unit UL, which includes also the DVB-T protocol.

Finally, the digital video-projector VP belonging to the system to which the present invention refers decodes (or can decode) the audio signals received from the input unit UA to generate an audio signal than can be used by an audio amplifier and transmits (or can transmit) the audio signal via wireless communication means, such as infrared ones, to a remote audio amplifier placed close to a paired wireless audio receiver.

Without departing from the scope of the invention, a person skilled in the art can make to the system to receive and display information object of the present invention all the changes and improvements suggested by the real experience and by the natural development of the technique.

## Claims

1. System to receive and display information coming from a plurality of sources, **characterised in that** it includes in combination to each other, an input unit (UA) apt to receive and process information coming from said sources and a video-projector (VP) connected to the input unit (UA) via wireless transmission means (WL).

2. System as in claim 1, **characterised in that** the video-projector (VP) is a digital video-projector.

3. System as in claim 1, **characterised in that** the input unit (UA) is a Personal Computer (PC).

4. System as in claim 1, **characterised in that** the input unit (UA) is a console.

5. Systems as in claim 1, **characterised in that** the wireless transmission means (WL) are realised in conformity with the WLAN 802.11 b/a protocol.

6. System as in claim 5, **characterised in that** the data "packets" to be transmitted via the wireless transmission means (WL) are coded through coding methods apt to detect and to correct errors, if any, in the transmitted data "packets".

7. System as in claim 1, **characterised in that** the input unit (UA) receives the information from the sources; it separates the video signal and the data streams from the audio signal; it codes the video signal and the data streams and transmits them to the video-projector (VP) via the wireless transmission means (WL); it decodes the audio signal and transmits it to an audio device; it receives from an Internet source (INT) the related "packets", it decodes and transmits them to the video-projector (VP) via the wireless transmission means (WL) and it manages the communication with the Internet "server".

8. System as in claim 4, **characterised in that** the console which is the unit input (UA) includes at least the following functional units, interconnected to each other via a bi-directional internal "bus" (BI):
• a logic unit (UL);
• a broadband modem (ASDL), interfaced with the telephone line (RT) via an analogue/digital interface (IRT);
• a processing unit (DSP) apt to decode the data "packets" coming from Internet (INT) and to communicate with the Internet "server";
• the wireless transmission means (WL).

9. System as in claims 6 and 8, **characterised in that** the logic unit (UL) belonging to the console which is the input unit (UA) encodes the data "packets" to be transmitted through said coding methods apt to detect and to correct errors, if any.

10. System as in claim 8, **characterised in that** the console which is the input unit (UA) further includes means (IDSC) apt to interface a digital camera (DSC) with the logic unit (UL).

11. System as in claim 8, **characterised in that** the console which is the input unit (UA) further includes means (IDVB) apt to interface with the logic unit (UL) at least one digital TV receiver (DVB).

12. System as in claim 8, **characterised in that** the console which is the input unit (UA) further includes means (IDVR) apt to interface with the logic unit (UL) a video recorder (VR).

13. System as in claim 8 where the input unit (UA) is connected to a digital video camera (DVC), **characterised in that** the processing unit (DSP) belonging to the input unit (UA) receives and transcodes the signal emitted by the digital video camera (DVC).

14. System as in claim 1, **characterised in that** the console which is the input unit (UA) is apt to be connected to the video-projector (VP) via a cable (VCA) attested to a further logic unit (CC) belonging to the input unit (UA).

15. System as in claim 14, **characterised in that** the input unit (UA) receives the information from the sources; it separates the video signal and the data streams from the audio signal; it decodes the video signal and the data streams and transmits them to the video-projector (VP) via said cable (VCA); it decodes the audio signal and transmits it to an audio device; it receives the related "packets" from the Internet source (INT), decodes them and transmits them to the video-projector (VP) via said cable (VCA) and manages the communication with the Internet "server".

16. System as in claim 1 or 14, **characterised in that** the console which is the input unit (UA) transmits without changes to the video-projector (VP) the video signal and/or the data streams and/or the Internet "packets" received from said plurality of sources, the video signals and/or the data streams and/or the Internet "packets" being transmitted to the video-projector (VP) via the wireless transmission means (WL) or via a cable (DCA), respectively.

17. System as in claim 1, **characterised in that** the video-projector (VP) decodes the video signals received from the input unit (UA) to generate the image to be projected on the screen.

18. System as in claim 17, **characterised in that** the video-projector (VP) includes at least the following functional units, interconnected to each other via an internal bi-directional "bus" (BI):
• a logic unit (UL);
• a processing unit (DSP) which decodes the signal sent by the corresponding processing unit (DSP) belonging to the input unit (UA);
• the wireless transmission means (WL);
the video-projector (VP) further including video-projection means (DLP) led by the logic unit (UL).

19. System as in claims 6 and 18, **characterised in that** the processing unit (DSP) belonging to the video-projector (VP) decodes the data transmitted via said decoding methods apt to detect and to correct errors, if any.

20. System as in claim 18, **characterised in that** the logic unit (UL) belonging to the video-projector (VP) further generates a mechanical and electrical noise apt to cancel the mechanical and electrical noise due to the movement of the mechanical parts of the video-projection means (DLP).

21. System as in claim 1, **characterised in that** the video-projector (VP) is apt to be connected to the input unit (UA) via a cable (VCA) attested by a further logic unit (CC1) belonging to the video-projector (VP).

22. System as in claim 16, **characterised in that** the video-projector (VP) decodes the video signals and/or the data streams and/or the Internet "packets" received from the input unit (UA), it generates the images to be projected on the screen and it manages the dialogue with the Internet "server".

23. System as in claim 1, **characterised in that** the input unit (UA) is a radio frequency transmission unit (TFM).

24. System as in claims 5 and 23, **characterised in that** the digital transmission means (WL) and the radio frequency transmission unit (TFM) operate on the same frequency band.

25. System as in claim 24, **characterised in that** the radio frequency transmission unit (TFM) includes at least the following functional units:
• first means (CV) apt to decode and digitalise the video signal (SV) present at one input of the radio frequency transmission unit (TFM);
• second means (CA) apt to decode and digitalise the audio signal (SA) present at a further input of the radio frequency transmission unit (TFM);
• an audio/video coder (MAC) having the inputs connected to the outputs of the first and second means (SV, SA) and the output connected to a transmission module (MT);
• the transmission module (MT), which transmits to the video-projector (VP), via a frequency modulation link (FM), the signal coming out from the audio/video coder (MAC).

26. System as in claim 25 where the audio signal (SA) can occupy different frequency bands, **characterised in that** the audio/video coder (MAC) associates to the signal to be transmitted to the video-projector (VP) a further signal apt to communicate to the video-projector (VP) the frequency band every time occupied by the audio signal (SA).

27. System as in claim 24, **characterised in that** the video-projector (VP) includes at least the following functional units, interconnected to each other via an internal bi-directional "bus" (BI):
• a reception unit (WL/MF) apt to receive either the digital signals transmitted via wireless transmission means (WL) or the analogue signals transmitted via the radio frequency link (FM);
• an analogue/digital converter (A/D), apt to convert the analogue signals received via the radio frequency link (FM) into digital signals apt to be managed by the processing unit (DSP) and/or by a logic unit (UL);
• the logic unit (UL);
• the processing unit (DSP), which decodes the signal sent from the corresponding processing unit (DSP) belonging to the input unit (UA);
the video-projector (VP) further including video-projection means (DPL) led by the logic unit (UL).

28. System as in claim 27, **characterised in that** the logic unit (UL) belonging to the video-projector (VP) further generates a mechanical and electrical noise apt to cancel the mechanical and electrical noise due to the movement of the mechanical parts of the video-projection means (DLP).

29. System as in claims 3 and 18, **characterised in that** the Personal Computer (PC) which is the input unit (UA) transmits in a transparent way to the video-projector (VP), via the transmission means (WL), all the elements to be displayed and **in that**, at the end of the transmission, the processing unit (DSP) of the video-projector (VP) restores the image on the screen of the Personal Computer (PC) and displays it via the visualisation means (DLP) of the video-projector (VP).

30. System as at least one of the previous claims and linked to another system functionally equivalent to set up a video-conference, **characterised in that** the video signal emitted by a digital video camera (DVC) linked to the input unit (UA) of the system according to the invention is coded by the processing unit (DSP) of said system and sent, via the broadband modem (ASDL) and the telephone line (RT), to the other system where it is received via a broadband modem and decoded and **in that** the coded video signal coming from the other system is received by the system according to the invention via the broadband modem (ASDL) and decoded by the processing unit (DSP) belonging to the video-projector (VP).

31. System as at least one of the previous claims, **characterised in that** the video-projector (VP) is provided with at least three right-angled antennas.

32. System according to claim 31, **characterised in that** six antennas (A1-A6), each placed on one side of the body (SC) of the video-projector (VP), are provided.

33. System according to claim 31 or 32, **characterised in that** the antennas (A1-A6) are planar antennas placed inside the right-angled walls of the body (SC) of the video-projector (VP).

34. System as according to at least one of claims 31-33, **characterised in that** it includes a switch by which the signals coming from the antennas (A1-A6) are matched to select the strongest signal.

35. System according to at least one of the previous claims, **characterised in that** the introduction from outside of PCMCIA modules connected to the control card of the video-projector (VP) is provided.

36. System according to claim 35, **characterised in that** it includes at least one PCMCIA module with at least one of the following functions:
• an IEEE8002.11 WLAN module, for a "wireless" video connection to the sources;
• an Ethernet standard card, to connect to a cable network LAN;
• an IEEE1394 link (i-link or firewire), to connect to the Camcoders or to other video sources;
• a Bluetooth module, to connect to PDA or to other portable sources;
• an analogue or digital terrestrial TV receiver;
and/or at least one of the following improvements:
• a DSP sub-system, apt to decode a compressed video signal received by one of said fast systems;
• a processing sub-system, to add the management capability of the interactive applications;
• communication sub-systems;
• memory cards apt to provide further additional contents of any type;
• a processing sub-system, apt to provide furthers calculation capabilities of processing in real time the video-compression.
• a DSP sub-system, suitable to be further used in the data sources and permitting a capability of processing the video compression at real time.

37. System according to claim 35, **characterised in that** it provides for a DSP accelerator (100) for PCMCIA cards with VGA/DVI input and output to permit to the PCMCIA card to receive the VGA output (101) of a data source (102) where the PCMCIA card can be inserted.

38. System according to claim 37, **characterised in that** the PCMCIA card includes a triple ADC to convert the VGA RGB signal into a digital one if the source output (102) is analogue; and/or an interface chip (DVI) to acquire the RGB signal and to transfer it to the DSP system of the PCMCIA card, if the source output (102) is analogue.

39. System according to at least one of the previous claims **characterised in that** it is connected to another system functionally equivalent via a bi-directional transmission data system to set up a video conference and **in that** it includes at least one microphone (M), at least one digital video camera (DVC), a management unit (PC), a digital video-projector (VP) and an access unit (WLAN), where the at least one digital video camera (DVC), the management unit (PC), the digital video-projector (VP) and the access unit (WLAN) are connected to each other via wireless bi-directional transmission means.

40. System as in claim 39 **characterised in that**:
• the at least one microphone (M) is connected to the digital video-projector (VP) via at least an analogue link (S);
• the digital video-projector (VP) is connected to the access unit (WLAN) to which it transmits the compressed and digitalised audio signal (SC) and from which it receives a local compressed video signal (Vcl) generated by the at least one digital video-camera (DVC) and the compressed remote audio-video signal (Vscr) received by the access unit (WLAN) from at least one remote location;
• the at least one digital video camera (DVC), connected to the access unit (WLAN), to which it transmits the compressed local video signal (Vlc);
• the management unit (PC), apt to manage the data streams in the location and the data streams exchanged with the at least one remote location, which communicates with the access unit (WLAN) from which it further receives the compressed audio signal (SC) and the local compressed video signal (Vcl).

41. System as in claim 40, **characterised in that** the at least one microphone (M) is connected to the digital video-projector (VP) via an infrared or frequency modulation wireless transmission system and **in that** it further includes a receiver of the wireless transmission system connected to the analogue audio input of the digital video-projector (VP).

42. System as in claim 40, **characterised in that** the management unit (PC) is further apt to transmit "slides" to the digital video-projector (VP), to which it is connected via an analogue video connection.

43. System as in claim 40, **characterised in that** the compressed remote audio/video signal (Vscr) includes both the images captured by the at least one digital video camera (DVC) of the remote location and the "slides" generated by a source connected to the access unit (WLAN) via Internet.

44. System as in claim 40, **characterised in that** the management unit (PC) transmits the "slides" to at least one remote location via the access unit (WLAN) and via Internet.

45. System as in claim 40, **characterised in that** the "slides" are sent to at least one remote location before the videoconference and are called back by transmitting via Internet only the control signals of the presentation software.

46. System as in claim 40, **characterised in that** the digital video-projector (VP) compresses the image displayed and transmits it to at least one remote location, where it is decoded and displayed by the digital video-projector (VP) belonging to the at least a remote location.

47. System as in claim 46, **characterised in that** the digital video-projector (VP) compresses the displayed image coding the moving image part with a fixed frequency and the stable image part with a hierarchical method.

48. System as in claim 40, **characterised in that** the "slide" is captured via a digital video camera (DVC), coded and transmitted to at least one remote location.

49. System as in claim 40, **characterised in that** the digital video-projector (VP) includes in combination to each other:
• video-projection means (DLP),
• a logic unit (UL) apt to support systems for the bi-directional data transmission, video conference protocols and means apt to select and to overlay live video signals and "slides",
• a system (DSP) apt to code and decode audio and video signals,
• an access unit (WLAN) apt to connect to the net the digital video-projector (VP) via a card (PCMCIA),
• a bus (B) apt to connect to each other said functional blocks (DSP, WLAN, UL, DLP).

50. System as in claim 49, **characterised in that** the card (PCMCIA) is made by a IEEE 802.11 b/a WLAN card, by an Ethernet card, by a broadband card, by a standard modem card, by a "H.323 standard stack" unit or by a UMTS card.

51. System as in claim 40, **characterised in that** the at least one digital video camera (DVC) is connected to the digital video-projector (VP) via an analogue video input and **in that** the analogue audio and video signals generated by the at least one microphone (M) or by the at least one digital video camera (DVC), respectively, are coded via the system (DSP) belonging to the digital video projector (VP).

52. System as in claim 39, **characterised in that** the digital video camera (DVC) includes:
• a capturing module (CCD);
• a logic unit (UL) apt to support the IP protocol and video conference protocols;
• a system (DSP) apt to compress the video signal generated by the capturing module (CCD);
• an access unit (WLAN) apt to connect to the net the digital video camera (DVC);
• a data bus (B), which connects to each other, said functional block (DSP, WLAN, UL, CCD).

53. System as in claim 52, **characterised in that** the access unit (WLAN) is made by an IEEE802.11 b/a WLAN card, by a UMTS card or by an Ethernet card.

54. System as in claim 40, **characterised in that** the at least one digital video camera (DVC) is a 360 degree video camera, whose output signal is processed and compressed by the unit (DSP) belonging to the digital video-projector (VP).

55. System as in claim 40, **characterised in that** it includes a plurality of digital video cameras (DVC) connected to the inputs of a video mixer whose output is connected to the digital video-projector (VP) and **in that** the video mixer output signal is compressed and transmitted on line by the unit (DSP) belonging to the digital video-projector (VP).

56. System as in claim 40, **characterised in that** the at least one microphone (M) is a high quality microphone apt to eliminate the noises and **in that** its output signal is compressed and transmitted on line by the unit (DSP) belonging to the digital video-projector (VP).

57. System as in claim 1 where the input unit (UA) is a receiver for digital TV, **characterised in that** the digital video-projector (VP) includes, in combination to each other:
• video-projection means (DLP),
• a logic unit (UL) apt to support the communication protocols;
• a system (DSP) apt to code and decode audio and video signals according to known standards and algorithms;
• means (FE) apt to capture the digital TV signal and transmit it to the receiver for digital TV receiver;
• a bus (B) apt to connect to each other said functional blocks (DLP, UL, DSP, FE).

58. System as in claim 57, **characterised in that** the receiver for terrestrial digital TV is integrated in the logic unit (UL), which also supports a DVB-T protocol.

59. System as in claim 1, **characterised in that** the video-projector (VP) decodes the audio signals received from the input unit (UA) to generate an audio signal than can be used by an audio amplifier.

60. System as in claim 59, **characterised in that** the video-projector (VP) can transmit the audio signal via wireless communication means such as infrared to a remote audio amplifier placed close to a paired wireless audio receiver.
